(19) Europäisches Patentamt
European Patent Office
Office européen des brevets

(11) **EP 2 600 124 A2**

(12) **EUROPEAN PATENT APPLICATION**

(43) Date of publication:
**05.06.2013 Bulletin 2013/23**

(51) Int Cl.:
***G01G 19/10*** (2006.01)  ***G01G 23/01*** (2006.01)

(21) Application number: **12192775.0**

(22) Date of filing: **15.11.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **25.11.2011 GB 201120359** | (71) Applicant: **AGCO International GmbH 8212 Neuhausen am Rheinfall (CH)**<br><br>(72) Inventor: **Knobloch, Juergen 87674 Ruderatshofen (DE)**<br><br>(74) Representative: **AGCO Intellectual Property Department Abbey Park Stoneleigh Kenilworth, Warwickshire CV8 2TQ (GB)** |

(54) **Method for determining the mass of a load on a pivotable linkage**

(57)    A method for determining the mass of a load upon a tool mounted to a linkage. The linkage is pivotable about a pivot point by at least one hydraulic cylinder. The method comprises moving the linkage without a load from a starting position to a finishing position and generating a reference curve from which a variation of hydraulic pressure of the cylinder with position of the linkage or cylinder can be derived, loading the load onto the tool and moving the linkage from a first position to a second position and measuring a hydraulic pressure at a given position of the linkage or cylinder and calculating the mass of the load by subtracting the hydraulic pressure without load from the hydraulic pressure with load at the given position and using at least one adjustment factor in the calculation. Movement of the linkage from the starting position to the finishing position is through a mid position and movement from the position to the finishing position is at least partly along a same path as movement from the starting position to the mid position.

Fig. 1

**Description**

The present invention relates to a hydraulically operated vehicle, or machine for transferring and weighing material. More specifically, the invention relates to a method for determining the mass of a load carried in the tool.

Hydraulically operated vehicles, such as loaders and tractors fitted with front loaders are used to transfer material. It is preferable to know the mass of the material being carried.

It is known to use hydraulic pressure to determine the mass of the material.

US20040133384 discloses a hydraulic system with a method which uses a hydraulic pressure-weight curve with plotted hydraulic pressures for a variety of known weights. The curve is then used to determine the weight of material from a measured pressure.

EP0462965 uses curves showing plotted hydraulic pressures against the corresponding hydraulic cylinder extension for an empty tool and a tool with a known material weight. If a measured pressure of a load at a particular measured extension is known, the weight of the tool can calculated from the curves. Both of these methods require calibration of the measuring system with known weights, that is weight of the empty tool, or weights of the material. This can be time consuming and not practical if other weighing means are not easily available. Moreover, if the hydraulic cylinders, or tools are adjusted, or swapped, the systems need to be recalibrated.

It is an aim of the present invention to provide a method for determining the mass of a load upon a tool which overcome some, or all of the disadvantages of the known methods.

According to the invention, there is provided a method for determining the mass of a load upon a tool mounted to a linkage, said linkage pivotable about a pivot point by at least one hydraulic cylinder, **characterised in that** the method comprises moving the linkage without a load from a starting position to a finishing position and generating a reference curve from which a variation of hydraulic pressure of the cylinder with position of the linkage or cylinder can be derived, loading the load onto the tool and moving the linkage from a first position to a second position and measuring a hydraulic pressure at a given position of the linkage or cylinder and calculating the mass of the load by subtracting the hydraulic pressure without load from the hydraulic pressure with load at the given position and using at least one adjustment factor In the calculation, wherein movement of the linkage from the starting position to the finishing position is through a mid position and movement from the mid position to the finishing position is at least partly along a same path as movement from the starting position to the mid position.

This way the weight of the tool need not be known before it is mounted to the linkage.

Preferably, the reference curve is generated by moving the linkage and tool without load. Alternatively, the reference curve is generated by moving the linkage only.

Preferably, the pressure of the linkage only and pressure of the linkage, tool and load is converted to a mass by an adjustment factor at the given position and the mass of load only and mass of the linkage only is subtracted from the mass of linkage, tool and load.

More preferably, the hydraulic pressure of the linkage and tool without load is measured and the hydraulic pressure of the linkage only at the given position is subtracted from it to give a hydraulic pressure of the tool only.

Preferably, the hydraulic pressure of the tool only is converted to a mass by an adjustment factor and the mass is stored in the system

Preferably, the pressure of the linkage only and pressure of the linkage, tool and load is converted to a mass by an adjustment factor at the given position and the mass of load only and mass of the linkage only is subtracted from the mass of linkage, tool and load.

More preferably, the method comprises a test to confirm that a correct cylinder is being used wherein a rotational speed and fluid flow is inputted into a control system and wherein the linkage is moved at the inputted fluid flow rate and the rotational speed of the linkage is measured and compared with the inputted rotational speed values and if the values are similar or the same the correct cylinder is being used.

The operator may be warned if there is a difference in the rotational speeds.

The starting position and the finishing position may be the same.

Preferably the reference curve is generated using values calculated from moving from the staring position to the mid position and from moving from the mid position to the finishing position.

Movement from the first position to the second position is through a third position and movement from the third position to the second position is at least partly along the same path as movement from the first position to the third position.

The hydraulic pressure with load is preferably an average of the hydraulic pressure at a given position when moving from the first position to the third position and the hydraulic pressure at the given position when moving from the third position to the second position.

A sensor may detect the position of a cylinder associated with the tool and the operator is alerted if the tool is not in a retracted position.

The linkage may be attached to a machine or a vehicle and a sensor detects if the machine or vehicle is on a slope and if this is the case an appropriate adjustment factor is used during calculations.

At least one adjustment factor is preferably a mass/pressure factor.

The method is preferably for use on an agricultural tractor.

The invention will now be described, by way of example only, with reference to the following drawings in which:

Figure 1 is a side view of a tool carrying a load operated by a hydraulic cylinder in accordance with the invention,

Figure 2 is a graph showing pressure against position in accordance with the invention, and

Figure 3 is a graph showing position against time in accordance with the invention.

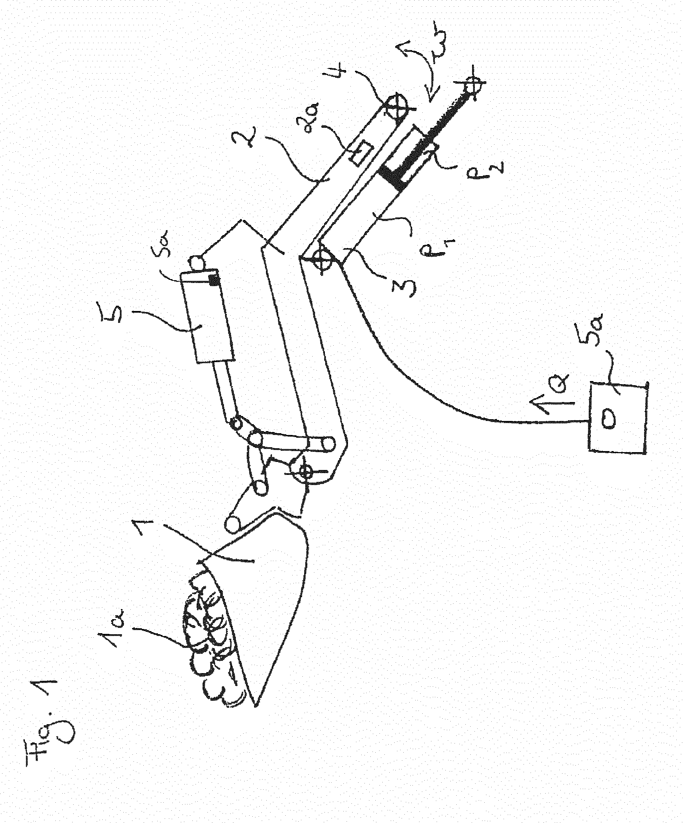

Figure 1 shows a tool 1 such as a bucket loaded with material 1 a to be transferred. The tool 1 is connected to linkage 2 at one end. The linkage would normally be mounted to a vehicle, such as at tractor (not shown). A further part of the linkage 2 is connected to hydraulic cylinder 3. Hydraulic cylinder 3 can be extended and retracted by altering the pressures, P1 and P2. Cylinder 3 is connected to a hydraulic supply 5a. Movement of cylinder 3 pivots linkage 2 about pivot point 4 to lift and lower the tool 1. A further hydraulic cylinder 5 is attached to the linkage and the tool 1, so that the tool can be pivoted to empty, or scoop material from, or into the tool.

The linkage may be mounted to a machine or vehicle such as an agricultural tractor.

The system is also equipped with a slope sensor to determine whether the vehicle or machine to which the linkage is attached is on flat ground or a slope since this may affect the accuracy of measurements made. If a slope is detected an appropriate adjustment factor will be taken into consideration when calculations from measurements are made.

Sensor 5a determines the position of the tool 1 as to whether it is in an extended or retracted position. Only with a retracted tool are the measurements accurate. If the tool is not fully retracted during measuring, the system alerts the operator and the operator can then fully retract the tool and initiate the method.

Use of the word cylinder herein also refers to more than one cylinder, since linkages and front loaders may be provided with two cylinders acting in parallel to move a part of the linkage.

The method comprises a number of steps. Not all the steps may be necessary if a tool which is fitted to the linkage is to be used for a long period of time and is not to be swapped for another tool.

The rotational speed, $\omega$ of the linkage 2 about pivot point 4 is known for a given cylinder diameter with a given fluid flow, Q.

In a first step the hydraulic cylinder which is to be used to lift and lower the linkage is entered into a control system. The control system may comprise an e-box 2a located on the loader or in the tractor cab. Each hydraulic cylinder has an associated rotational speed, $\omega$ which is entered into the control system of the loader together with the corresponding known fluid flow value Q which could be, for example 10 l/min.

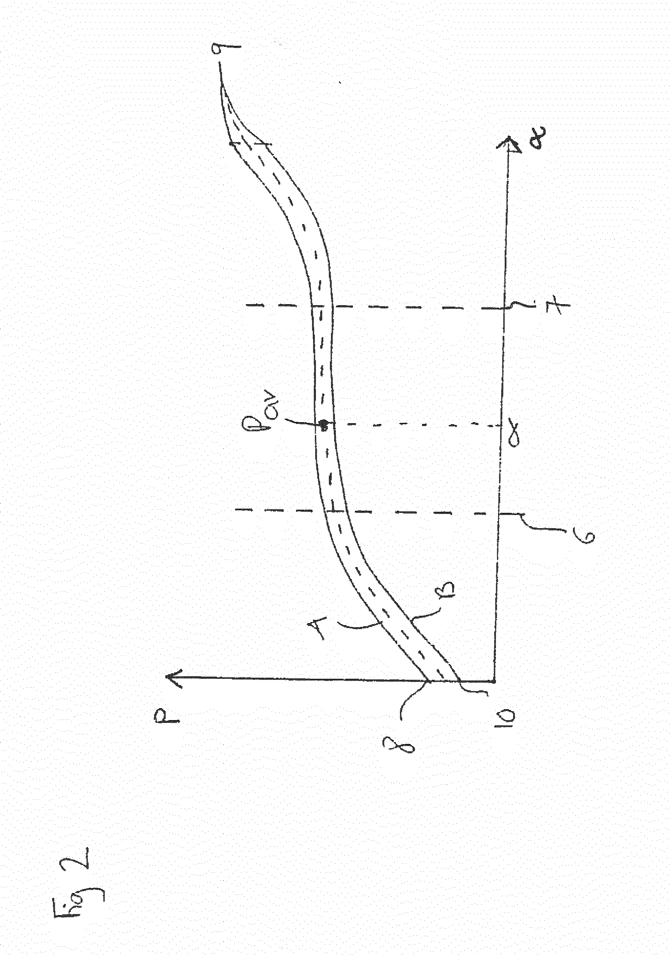

In a second step, a reference curve of pressure (P) - position($\alpha$) is generated and stored in the system. The position $\alpha$ may refer to the position of the linkage, for example the distance of a part of it from the ground, or the position of the cylinder, that is amount it is extended or retracted. The reference curve is described by reference to figure 2. The reference curve may be generated by two methods:

Method 2a: Movement of the linkage with a tool attached thereto (this may be used in cases where the same tool is used by the operator), or

Method 2b: Movement of the linkage only, that is without a tool attached (this may be used in cases where the operator frequently swaps the tool).

If the same tool is to be used for a long period without attaching an alternative tool, step 2 should be performed with method 2a, that is with the empty tool attached to the linkage, so that time is not wasted with further unnecessary re-calibration steps as will be apparent later on.

If a variety of different tools is to be fitted to the linkage, step 2 should be conducted using method 2b, that is with no tool attached.

The linkage with or without tool is moved from a starting position to a mid position and back to the starting position. Step 2 may comprise movement upwards from the starting position to a mid position and then movement from the mid position towards the starting position. With reference to figure 2, curve A shows the variation of hydraulic pressure P of the cylinder 3 with the position of the linkage $\alpha$ whilst moving from the starting position 8 upwards to the mid position 9. Curve B shows the variation of hydraulic pressure P with position $\alpha$ whilst moving downwards from the mid position to the finishing position 10. Alternatively, curves could be generated by moving the linkage from a starting position downwards towards a mid position and upwards towards the starting position. The reference curve is shown in Figure 2 by the dotted line and is generated within the area defined by the two curves A, B. The reference curve is the average of the pressure values of curves A, B and thus the effects of hysteresis and friction of the fluid are reduced. The reference curve shows the net hydraulic pressure of the linkage only, or the linkage with tool for varying positions $\alpha$ of the linkage, or hydraulic cylinder.

The starting position could be a position whereby the linkage is on the ground, or at its highest possible position and the mid position could be a position whereby the linkage is at its the highest possible position, or on the ground.

The result of step 2 is that an average pressure of the tool and linkage $P_{average,tool,linkage}$ or an average pressure of the linkage only, $P_{average,linkage}$ may be obtained for a given position $\alpha$.

By measuring the rotational speed $\omega$ of the linkage whilst keeping the volume flow Q constant during the upward movement and comparing it with the entered value w from step 1, it can be shown whether the hydraulic cylinder has been changed or adjusted since its last use. The speed of this upward movement is load independent and therefore this movement can be conducted with or without the tool or load. If the values of w are the same then no change or adjustment has been made to the hydraulic cylinder. If the values of the rotational speed w are different the system reports an error (that a different hydraulic cylinder than that identified in step 1 is being used) and requests that step 1 is repeated to identify the correct hydraulic cylinder.

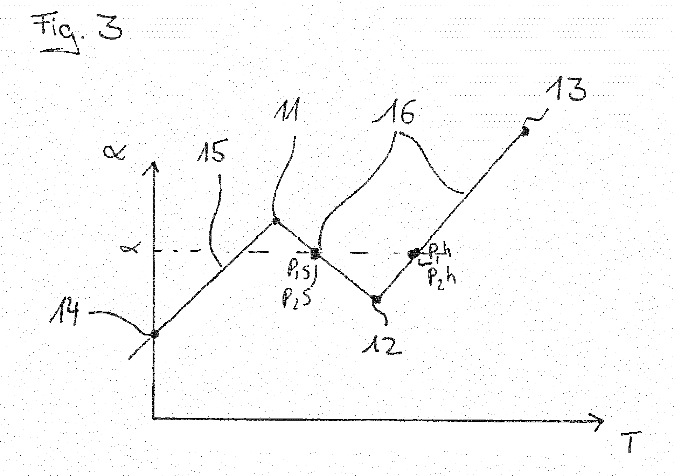

Step 3 measures the hydraulic pressure when a tool without load is attached to the linkage as shown in figure 3. Figure 3 shows confirmation movement 15 and measuring movement 16 on a position ($\alpha$) - time (T) graph. Step 3 is not necessary if method 2a is followed in step 2. Step 3 comprises a confirmation movement 15 and a measuring movement 16.

The confirmation movement 15 confirms which cylinder is being used and gives a mass estimation of the tool by measuring pressure P1 and/or P2 of the cylinder 3. The linkage is moved from an initial position 14 to a first position 11, in which the tool moves a vertical difference of approximately 20cm. The speed of this confirmation movement is load independent and therefore this movement can be conducted with, or without the load.

In the measuring movement an average hydraulic pressure of the linkage and tool is measured which is known as the average hydraulic pressure with tool $P_{average,tool, linkage}$. In the measuring movement the tool is lowered from the first position 11 to a third position 12 and lifted from the third position to a second position 13. The initial position 14 and third position 12 are not at the same position $\alpha$. First position 11 and second position 13 are also not at the same position $\alpha$. The angular speed $\omega$ is kept constant whilst the volume flow Q is allowed to change. This measuring movement is pre-programmed, and therefore the movement from the first position to the third position to the second position is automatic once the measuring movement is initiated. The hydraulic pressures P1, P2 of cylinder 3 are measured during lowering and during lifting at a known position $\alpha$. During lowering, the pressures P1s, P2s at position $\alpha$ are measured as shown in figure 3. During lifting the pressures P1h, P2h are measured at position, $\alpha$ as shown in figure 3. The measurements are preferably made between positions marked 6 and 7 in figure 1, that is when the linkage is not too low and not too high so that hysteresis has negligible effects and pressure readings are more accurate. From pressures P1 h, P2h, P1 s and P2s an average pressure for a given linkage position, $\alpha$ is calculated by, for example:

$$(P_{1h} - P_{2h}) + (P_{1s} - P_{2s}) / 2 = P_{average, tool, linkage}$$

Step 3 is used to calculate the mass of the tool.

If method 2b in step 2 was used, that is without the tool attached, then the average pressure for the tool only $P_{average,tool}$ is calculated by subtracting $P_{average,linkage}$ of method 2b from $P_{average, tool, linkage}$ at the given position $\alpha$.

This net hydraulic pressure associated with the tool, $P_{average,tool}$-is then multiplied by at least one adjustment factor, for example a mass/pressure factor.

The net hydraulic pressure of the tool, $P_{average,tool}$, or the mass of the tool can be stored in the system.

Step 4 measures the pressure associated with the load in the tool. Step 4 may comprise the confirmation movement of step 3 to confirm which cylinder is being used and to give a mass estimation by measuring pressure P1 and/or P2. The speed of this confirmation movement is load independent and therefore this movement can be conducted with or without a load on the tool. If the measured rotational speed $\omega$ corresponds to that recognised by the system for that cylinder then the second measuring movement of step 3 can be conducted to calculate the average hydraulic pressure of the hydraulic cylinder for load, linkage and tool, $P_{average,load,linkage,,tool}$. This measuring movement is the same as that for step 3 and thus is also pre-programmed, and therefore the movement from the first position to the second position to the third position is automatic once the movement is initiated. The hydraulic pressures P1, P2 of cylinder 3 are measured during lowering and during lifting at position $\alpha$. During lowering, the pressures P1 s, P2s at position $\alpha$ are measured as shown in figure 3. During lifting the pressures P1h, P2h are measured at position $\alpha$ as shown in figure 3. From pressures P1h, P2h, P1s and P2s an average pressure for a given position is calculated by, for example:

$$(P_{1h} - P_{2h}) + (P_{1s} - P_{2s}) / 2 = P_{average, load, linkage, tool}$$

In step 5 the mass of the load is calculated.

If method 2a of step 2 was followed the value of $P_{average, linkage, tool}$ from the reference curve at position $\alpha$ for step 2a is subtracted from $P_{average, load, linkage, tool}$ of step 4 at the same position $\alpha$ to give a net hydraulic pressure associated with the load only, $P_{average, load}$. $P_{average, load}$ is then multiplied by at least one adjustment factor, for example a mass/pressure factor to give the mass of the load only.

If method 2b of step 2 was followed, the mass of the tool of step 3 is stored in the system. In this case, the value of $P_{average, linkage}$ from the reference curve is subtracted from $P_{average, load, linkage, tool}$ from step 4 at the same position $\alpha$ to give a net hydraulic pressure associated with the load and tool, $P_{average load, tool}$. $P_{average, load, tool}$ is then multiplied by at least one adjustment factor, for example a mass/pressure factor to give the mass of the load and tool. From this value, the mass of the tool from step 3 is subtracted to give the mass of the load only.

If the net hydraulic pressure of the tool, $P_{average, tool}$, of step 3 is stored into the system, the value of $P_{average, linkage}$ from the reference curve at a position $\alpha$ for step 2b is subtracted from $P_{average, load, linkage, tool}$ from step 4 at the same position $\alpha$ to give a net hydraulic pressure associated with the load and tool, $P_{average load, tool}$. From $P_{average load, tool}$ $P_{average, tool}$ from step 3 is subtracted to give the net hydraulic pressure of the load, $P_{average load}$. $P_{average load}$ is then multiplied by at least one adjustment factor, for example a mass/pressure factor to give the mass of the load.

Steps 2 to 4 will only be carried out if the measured rotational speed $\omega$ is the same or close to the entered value from step 1. If the measured $\omega$ is not equivalent to the entered value of $\omega$ from step 1 the system records that an error has happened and the operator should start step 1 again and enter which hydraulic cylinder is in use and repeat step 2.

After step 5 the load can be unloaded from the tool 1 and a new load can be grabbed and weighing steps 4 to 5 can be initiated if the same tool is still attached. If during unloading and loading the hydraulic cylinder 3 is swapped the system will recognise this by the confirmation movement and will notify the operator.

The method described herein provides an improved method of determining the mass of a load in a front loader.

In a further arrangement of the invention, the e-box located on the linkage or on a tractor recognises that a tool has been swapped for another. For example, a remote tool locking system which locks the tool to the hydraulic cylinder could be used to alert the operator when the tool is unlocked from the cylinder.

Alternatively, a tool whose presence is identifiable by RFID (Radio Frequency Identification) or any other mechanical, or electrical means could be used.

The recognition of a change of tool results in that the method must repeat step 3 to determine the mass of the tool.

The system may be able to identify different tools, for example by RFID and store respective pressure values associated with the masses of the different tools. The pressure values for the different tools may be stored by the e-box located on the loader, or tractor after initial weighing in step 3 resulting in a list of tools and their masses. For these tools, step 3 may be omitted.

If an average pressure value for method 2a is determined the system can recognise whether a tool has been changed and if so that a new reference curve must be generated.

Furthermore, the system may also recognise the change of a hydraulic cylinder when a change has been made. Thus, step 1 could be immediately initiated.

**Claims**

**1.** Method for determining the mass of a load upon a tool mounted to a linkage, said linkage pivotable about a pivot point by at least one hydraulic cylinder, **characterised in that** the method comprises moving the linkage without a load from a starting position to a finishing position and generating a reference curve from which a variation of hydraulic pressure of the cylinder with position of the linkage or cylinder can be derived, loading the load onto the tool and moving the linkage from a first position to a second position and measuring a hydraulic pressure at a given position of the linkage or cylinder and calculating the mass of the load by subtracting the hydraulic pressure without load from the hydraulic pressure with load at the given position and using at least one adjustment factor in the calculation, **characterised in that** movement of the linkage from the starting position to the finishing position is through a mid position and movement from the mid position to the finishing position is at least partly along a same path as movement from the starting position to the mid position.

**2.** Method as claimed in claim 1 wherein the reference curve is generated by moving the linkage and tool without load.

3. Method as claimed in claim 1 wherein the reference curve is generated by moving the linkage only.

4. Method as claimed in claim 3 wherein a hydraulic pressure of the linkage and tool without load is measured and the hydraulic pressure of the linkage only at the given position is subtracted from it to give a hydraulic pressure of the tool only.

5. Method as claimed in claim 4 wherein the hydraulic pressure of the tool only is converted to a mass by an adjustment factor and the mass is stored in the system.

6. Method as claimed in claim 5 wherein the pressure of the linkage only and pressure of the linkage, tool and load is converted to a mass by an adjustment factor at the given position and the mass of load only and mass of the linkage only is subtracted from the mass of linkage, tool and load.

7. Method as claimed in any preceding claim wherein the method comprises a test to confirm that a correct cylinder is being used wherein a rotational speed and fluid flow is inputted into a control system and wherein the linkage is moved at the inputted fluid flow rate and the rotational speed of the linkage is measured and compared with the inputted rotational speed values and if the values are similar the correct cylinder is being used.

8. Method as claimed in claim 7 wherein the operator is warned if there is a difference In the rotational speeds.

9. Method as claimed in claim 1 wherein the starting position and the finishing position are the same.

10. Method as claimed in claim 1 or claim 9 wherein an average reference curve is generated using values calculated from moving from the staring position to the mid position and from moving from the mid position to the finishing position.

11. Method as claimed in any preceding claim wherein movement from the first position to the second position is through a third position and movement from the third position to the second position is at least partly along the same path as movement from the first position to the third position.

12. Method as claimed in claim 11 wherein the first and second positions are not the same.

13. Method as claimed in claim 11 or claim 12 wherein the hydraulic pressure with load is an average of the hydraulic pressure at a given position when moving from the first position to the third position and the hydraulic pressure at the given position when moving from the third position to the second position.

14. Method as claimed in any preceding claim wherein a sensor detects the position of a cylinder associated with the tool and the operator is alerted if the tool is not in a retracted position.

15. Method as claimed in any preceding claim wherein the linkage is attached to a machine or a vehicle and a sensor detects if the machine or vehicle is on a slope and an appropriate adjustment factor is used during calculations.

16. Method as claimed in any preceding claim wherein the at least one adjustment factor is a factor comprising mass and pressure.

17. Method as claimed in any preceding claim for use on a tractor.

Fig. 1

Fig 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040133384 A
- EP 0462965 A